# EUROPEAN PATENT SPECIFICATION

(11) **EP 2 179 618 B1**
(45) Date of publication and mention of the grant of the patent: **01.12.2010**
(21) Application number: 08775110.3
(22) Date of filing: 16.07.2008
(51) Int. Cl.: H04W 64/00

(54) **METHOD AND SYSTEM FOR SUPPORTING THE SEARCH FOR A MOBILE STATION**
VERFAHREN UND SYSTEM ZUM UNTERSTÜTZEN DER SUCHE NACH EINER MOBILSTATION
PROCÉDÉ ET SYSTÈME D'ASSISTANCE À LA RECHERCHE D'UNE STATION MOBILE

(30) Priority: 20.07.2007 SE 0701767; 30.08.2007 US 968891 P
(43) Date of publication of application: 28.04.2010
(73) Proprietor: Resqu AB, 223 70 Lund (SE)
(72) Inventor: BLOM, Marcus, S-724 81 Västerås (SE); TUFVESSON, Fredrik, 222 40 Lund (SE); THORSELL, Fredrik, 118 48 Stockholm (SE)
(74) Representative: Holmberg, Nils Anders Patrik
(86) International application number: PCT/EP2008/059261
(87) International publication number: WO 2009/013188

(56) References cited:
- US-A- 6 141 558
- US-A1- 2004 198 381

## Description

### FIELD OF INVENTION

The invention relates to a method, a system and devices for supporting the search for a wireless device. More specifically the invention relates to a method, a system, a base unit and a search unit for locating unknown cellular telephones and guiding the search for such devices.

### BACKGROUND OF INVENTION

Locating wireless devices using the emitted radio waves is a well known technique. By means of some kind of directional antenna, it is possible to find the direction to the source, and thereby the location of the device. Similarly, by measuring the time difference for the signal to reach a multiple of receivers it is possible to determine the distance to the source and by simple trigonometry or more advanced parameter estimation algorithms it is possible to estimate the location of the source, see e.g. the book "Wireless Communications" by A.F. Molisch, Wiley, U.K. 2005.

The location systems can, e.g., be used to find people buried in rubble or snow. For the latter there are two dominating techniques: using an active radio device where the emitted radio signal is detected or a passive device that changes the characteristics of a radio signal transmitted by the rescue crew.

The active avalanche beacons are effective for locating people buried in snow, and since the devices both can work as transmitter and as receiver, the search can start immediately if there are persons in the vicinity wearing such a device not captured by the avalanche.

Another method for locating people buried in, e.g., snow, is based on a passive device that alters the characteristics of a transmitted radio signal, often by some kind of non-linear behavior as used in US4331957. The reflector is a small antenna and a non-linear component adding a second harmonic to the received signal before reflecting it back. This second harmonic can then be detected by the search device that also transmits the original signal. For a passive reflector there is no need for any power supply and the size of the reflector can be small.

For active radio based positioning, any radio transmitter can in principle be used. There are many proposals for systems, aimed to locate active cellular phones, see e.g. US6141558 when a call or call attempt is made. During a call the cellular phone continuously transmits (often bursts of) radio signals that can be detected and the direction or location of the device can thereby be found by use of some direction finding device. If the identity of the device is known the cellular system can initiate communication with the cellular phone, but most often the identities are not known for people buried, e.g. in snow or rubble.

As described above it is possible to use a radio device for determining the location of, e.g. people buried in snow or rubble. Though current based methods based on active beacons or passive reflectors work well, they are not in widespread use and therefore not of help in many rescue operations and, in case of an active beacon, it must be powered in order to enable the search operation.

ES02156552A1 presents a method to *detect* unknown cellular phones by forcing them to change base station so that the cellular phone transmits a "location update" message that can be detected by a receiver. This method aims at detecting activated (powered) cellular phones in areas with some kind of restriction for cellular traffic, e.g. in airplanes or hospitals. This method, however, is not well suited for locating the cellular phone in a search operation in an efficient way, since the main goal with this system is to determine whether there are active cellular phones in the coverage area of the system but not to exactly locate them. The fact that there is only a single location update message transmitted, see "Experimental real-time detector of GSM terminals" by Vales-Alonso et al, IEEE Communications Letters, Vol.7, Issue 3, pp 148-149, 2003, makes a location process impractical.

A method of finding cell phones buried in rubble and related situations according to the closest prior art is disclosed in US 2004/0198381 A1.

Other more widespread radio devices, e.g. cellular phones, can also be used for determining the location and thereby be helpful in rescue operations. The problem with today's techniques based on cellular phones can be summarized by one or several of the following drawbacks:
- the user has to initiate a call, and this is not possible in many cases;
- the identity of the cellular device has to be known;
- they do not give satisfactory accuracy in the estimate of the location;
- they are dependent on access to the control center of the cellular network; or
- they can only detect but not locate the cellular phone.

### SUMMARY OF THE INVENTION

The purpose of the invention is to support the search for mobile stations. The invention is especially useful in an avalanche situation, where avalanche victims need to be located. The invention supports the search for such victims by providing a transportable base unit and one or several search units that communicate with said base unit.

The invention relates in one aspect to a method for supporting a search for at least one mobile station operating in the radio frequency domain. The method involves at least one search unit that comprises an antenna arrangement and a base unit that is adapted to communicate with mobile stations within an area to be searched.

By means of base station functionality in the base unit mobile stations in the search area are identified and assigned dedicated communication channels. This is achieved through establishing communication between the base unit and the mobile stations in the search area. Search information comprising mobile station identity and corresponding dedicated channel for each mobile station in the search area is established in the base unit. The search information concerning the mobile stations in the search area is transferred from the base unit to the at least one search unit.

The search information concerning at least one of the mobile stations in the search area is presented in the at least one search unit. A search based on the presented search information for at least one of the mobile stations in the search area is initiated with the at least one search unit.

In a second aspect, the invention relates to a system for supporting a search for at least one mobile station operating in the radio frequency domain. The system comprises a transportable base unit which in turn comprises an antenna arrangement, radio means, a user interface, a wireless interface, a database, and computer means. The base unit is adapted to communicate with mobile stations within an area to be searched.

The system also comprises at least one search unit which in turn comprises an antenna arrangement, a user interface, a wireless interface, and logic means.

The base unit computer means is adapted to identify mobile stations in the search area and dedicate communication channels for the mobile stations by means of base station functionality. This is done by establishing communication between the base unit and the mobile stations in the search area by means of the antenna arrangement and the radio means.

The base unit is also adapted to establish search information regarding each of the mobile stations in the search area in its database, whereby the search information comprises the identity and the dedicated channel for each mobile station in the search area.

Furthermore, the base unit is adapted to transfer the search information concerning the mobile stations in the search area to the at least one search unit by means of the wireless interface.

The at least one search unit is adapted to receive the search information concerning the mobile stations in the search area from the base unit by means of the wireless interface in the search unit.

The at least one search unit is further adapted to present search information concerning at least one of the mobile stations in the search area by means of the user interface.

Finally, the at least one search unit is adapted to initiate and support a search based on the presented search information for at least one of the mobile stations in the search area by means of the antenna arrangement and the logic means that is adapted to receive control signals from the user interface in the search unit.

According to a third aspect of the invention a base unit for supporting a search for at least one mobile station operating in the radio frequency domain is provided. The base unit comprises an antenna arrangement, radio means, a user interface, a wireless interface, a database, and computer means. The base unit is adapted to communicate with mobile stations operating in the radio frequency domain within an area to be searched.

The base unit computer means is adapted to identify mobile stations in the search area and dedicate communication channels for said mobile stations by means of base station functionality. This is achieved by establishing communication between the base unit and the mobile stations in the search area by means of the antenna arrangement and the radio means.

In addition, the base unit is adapted to establish search information in the database regarding each of the mobile stations in the search area. The search information comprises identity and dedicated channel for each mobile station in the search area.

The base unit is also adapted to transfer the search information concerning the mobile stations in the search area to at least one search device. This is done by means of the wireless interface.

In a fourth aspect, the invention relates to a search unit for supporting a search for at least one mobile station operating in the radio frequency domain, whereby the search unit comprises an antenna arrangement , a user interface, a wireless interface, and logic means.

The search unit is adapted to receive search information concerning the mobile stations in a search area from a base unit by means of the wireless interface in the search unit. By means of the user interface, the search unit is further adapted to present search information concerning at least one of the mobile stations in the search area.

Also, the search unit is adapted to initiate and support a search based on the presented search information for at least one of the mobile stations in the search area by means of the antenna arrangement and the logic means that is adapted to receive control signals from the user interface.

Further embodiments of the invention are specified in the description and the depending claims.

The method and system according to the invention provide a number of advantages. Examples of such advantages are that:
- the functionality of the base unit can be maintained at a minimum level, for instance since communication with any unknown mobile station does not require setup and use of authentication or encryption;
- distinguishing the mobile stations by allotting them different channels allows the hardware requirements of the search units to be low, since the search units do not need to fully interpret the transmitted signals but only keep track of the channels;
- the system does not require a potential victim to take any action in order to be found;
- the system will give rescue workers the possibility to use radio based estimation of the location to find all victims wearing a GSM compatible phone (also including UMTS phones that has GSM functionality);
- the technology is compatible with all generic GSM mobile stations (GSM phone + SIM card) of which there are presently more than 2 000 000 000 and rising throughout the world;
- the system does not require the presence of other base stations or the cooperation of network operators;
- the system does not interfere with other avalanche rescue systems;
- the system is not limited to use within avalanche rescue. All applications where all mobile stations present in an area need to be counted, forced to transmit or even need to receive a message without the presence of base stations or the cooperation of operators is possible with the proposed system; and
- the technology used is well known and well spread.

Further advantages and objects with the present invention will be described in more detail, inter alia with reference to the accompanying drawings.

### BRIEF DESCRIPTION OF THE DRAWINGS

Figure 1 shows a schematic block diagram of a system according to the invention;
Figure 2 shows a block diagram of an example extract of the signalling between a base unit and a mobile station;
Figure 3 shows a block diagram of the general flow of a method according to the invention; and
Figure 4 shows a map over an example scenario in which the invention can be used.

### DETAILED DESCRIPTION OF THE INVENTION

In the following the invention will be described in more detail by reference to the corresponding drawings.

Among others the following abbreviations will be used in the description below.
PLMN: Public Land Mobile Network
IMSI: International Mobile Subscriber Identity
TIMSI: Temporary International Mobile Subscriber Identity
BCH: Broadcast CHannel
RACH: Random Access CHannel
AGCH: Access Granted CHannel
SDCCH: Stand-alone Dedicated Control CHannel
LAI: Location Area Identity
LU: Location Update

The following examples are intended to illustrate, but not to limit, the invention in any manner, shape, or form, either explicitly or implicitly.

The system comprises a central unit, the base unit, and at least one hand held search unit. The base unit mimics the behavior of a base station and forces all the mobile stations within a specified radius to transmit. The search units are then used to locate the phones by radio based estimation of the direction once they are transmitting.

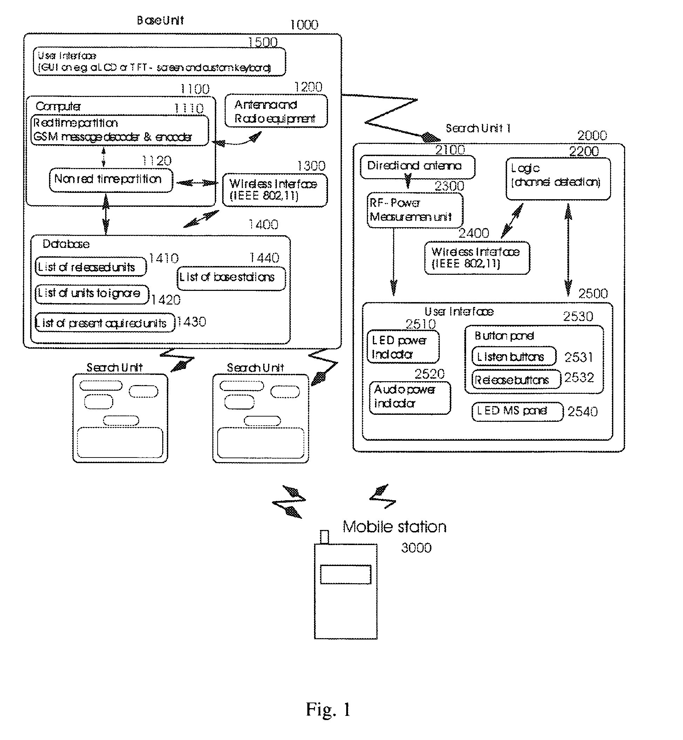

Figure 1 shows an embodiment of the system according to the invention.

The base unit 1000 is the central unit communicating with both the mobile stations 3000 (e.g., GSM cell-phone and SIM card) and all the search units 2000 being used in the rescue operation. In order to simplify, only one mobile station 3000 is shown in figure 1. However, the system according to the invention can be used to support the search for any number of mobile stations 3000. The base unit 1000 will look like a regular base station to a mobile station 3000. In reality the functionality of the base unit 1000 is very limited. The base unit 1000 have the possibility to in real time modulate and demodulate signals that are used for GSM. Apart from comprising functionality for the GSM standard, including the PCS and DCS bands, the base unit 1000 may have the possibility to handle other cellular communication standards, such as WCDMA, CDMA2000, and IS-95. The base unit 1000 comprises an antenna arrangement and radio means, which are represented by the antenna and radio equipment 1200 in figure 1. The base unit 1000 also has computer means in the form of a computer 1100, which could be implemented for instance as a microprocessor, a CPU, or similar processing means that also comprises input/output means and data storage means or memory means. The computer 1100 comprises a real time partition 1110 controlling the GSM signaling, and a non real time partition 1120 for controlling a small data base 1400, which is located in a computer readable storage, as well as a wireless interface 1300 that functions as communication means. The wireless interface 1300, which comprises a transceiver, is for communicating with search units 2000. For this interface 1300 the well known IEEE 802.11 standards are used since these give the required coverage and are easy to deploy. The computer 1100 controls the wireless interface 1300 to send information containing all acquired mobile stations' 3000 assigned channels from the data base 1400 to the search unit 2000. It will also update the data base 1400 with release orders from the search units 2000. This communication is handled by the computers 1100 non real time partition 1120. The data base 1400 contains a number of lists, such as lists 1430 of currently acquired mobile stations 3000 containing their allotted channels, a list 1410 of all released mobile stations 3000, a list 1420 of mobile stations 3000 to ignore and a list 1440 of base stations (not shown) present in the area with information about measured RF power from each base station. The list 1420 of mobile stations 3000 to ignore can be initially established in the base unit 1000 prior to setting up the system in the search area. All mobile stations 3000 that are to be excluded from the search can be kept in the ignore list 1420, including mobile stations 3000 carried by rescue personnel. The list 1410 of mobile stations 3000 to release is monitored by the non real time computer partition 1120 of the base unit 1000 and if an addition is made to the list 1410, the mobile station 3000 added is released. A user of any search unit 2000 can add any mobile station 3000 present in the list 1430 of acquired mobile stations 3000 to the release list 1410.

The base unit 1000 is preferably transportable. It may be designed to be easily carried by a single person. The base unit 1000 also has a user interface 1500 that comprises for instance a LCD or TFT screen and a custom keyboard. The user interface 1500 is used for all necessary manual actions that can be carried out on the base unit 1000. The user interface 1500 is connected to the computer 1100.

The main building blocks of the search unit 2000 are an antenna arrangement in the form of a highly directive antenna 2100, and RF electronics (RF power measurement unit) 2300 for locking to one or several communication channels, e.g. a time-frequency slot in the case of GSM, and to measure received power from an arbitrary set of channels. The search unit 2000 also contains a wireless interface 2400 that functions as communication means to communicate with the base unit 1000 and to transfer information to the base unit (1000). The wireless interface 2400 is controlled by logic means in the form of a logic unit 2200 which also controls the RF power measurement unit 2300. The logic unit 2200 is a control unit that can be implemented for instance as a microprocessor, a CPU, or similar processing means that also comprises input/output means and data storage means or memory means. The logic unit 2200 of the search unit 2000 only needs to send and receive a limited number of predefined messages to the wireless interface 2400 as well as controlling the RF power measurement unit 2300 to measure any subset of channels. The search unit 2000 also has a user interface 2500 to present measured power and to allow a search unit 2000 user to control which of the mobile stations 3000 the search unit 2000 should measure and which of the mobile stations 3000 the base unit 1000 should release. The user also have the possibility to tell the base unit 1000 to end or to resume the communication with specified mobile stations 3000, by transferring search results comprising at least one mobile station (3000) identity to the base unit (1000) by means of the wireless interface (2400). The user interface 2500 may, e.g., consist of a LED mobile station panel 2540 showing the actual mobile station 3000 (or mobile stations 3000) for which the power is presented, a button panel 2530, a LED RF power indicator a 2510 and an audio RF power indicator 2520. The LED mobile station panel 2540 may, e.g., have 2 LEDs for each mobile station 3000. One LED indicating that the mobile station 3000 is acquired and is transmitting, the other to show if the search unit 2000 is set to measure the power from that mobile station 3000. For each mobile station 3000 LED pair there can, e.g., be two buttons. One button 2532 for sending a release message to the base unit 1000 instructing it to release the mobile station 3000 or to resume communication if it is in a released state and one button 2531 to turn on/off measurement of RF power on the channel allotted to the mobile station 3000. The information sent to the base unit 1000 is sent by the logic unit 2200 via the wireless interface 2400.

In the following section the system is described as it will work for the GSM system. It may have similar functionality for other standards, though the naming convention is different for those.

The base unit 1000 triggers mobile stations 3000 within a search area to start transmit and then handles all the communication with the mobile stations 3000 in its area. The base unit 1000 is placed somewhere overlooking the entire search area. The output power of the base unit 1000 can be set at different levels by means of the user interface 1500. The power output level defines the size of the area that is to be searched. When starting the rescue operation the base unit 1000 scans the entire spectrum used for cellular services to determine whether there are neighboring base stations. This is done by the antenna and radio equipment 1200. The non real time computer partition 1120 determines which, if any, detected base stations that are WCDMA stations, which are GSM stations or if they use any other cellular standard. The system stores the detected power levels in the data base 1400 list 1440 of base stations since these later will be used as a basis for the jamming power transmitted by the radio equipment 1200, which comprises jamming means that may be controlled by the computer 1100, when jamming present base stations.

If base stations are detected, the system starts to jam their BCH signaling carriers, this is also performed by the antenna and radio equipment 1200. A new base station is then emulated by the base unit 1000. The emulation is done by the antenna and radio equipment block 1200 controlled by the real time computer partition 1110 using data from the non real time computer partition 1120. It then starts transmitting on any of the available BCH channels with a unique LAI. When the mobile stations 3000 can not maintain or establish communication with the base stations in their regular network they will find this new carrier and synchronize to it. Recognizing that it is a new LAI the mobile stations 3000 will try to make a location update (LU). During the communication when the mobile stations 3000 try to make a LU they send a random number in an access burst. This number is recognized by the real time computer partition 1110 and used to address the mobile station 3000 and to distinguish it from other mobile stations 3000, i.e. the random number identifies the mobile station 3000. The real time computer partition 1110 now starts to control the communication with the mobile stations 3000 through the antenna and radio equipment 1200 in order to trigger them to transmit radio signals that make them detectable. Each mobile station 3000 is allotted a unique channel (e.g., frequency and timeslot in the case of GSM), by the real time computer partition 1110. The channel together with the random number is all that is required by the system to distinguish between the mobile stations 3000. Information about unused channels is sent from the non real time computer partition 1120 to the real time computer partition 1110. When all the mobile stations 3000 are allotted a channel, the radio equipment 1200 stops jamming the other BCH carriers, without the mobile stations 3000 attempting to switch back to their previous possible base stations. All GSM signaling above is composed and timed by the real time computer partition 1110, modulated by the radio electronics in the antenna and radio equipment 1200.

The non real time computer partition 1120 now starts the process to communicate the number of mobile stations 3000, including their respective identities, in the area to the one or several search units 2000 using the wireless interface 2400. It also communicates the channels where they are transmitting. This data will be used as search information which is transferred from the base unit 1000 to the at least one search unit 2000. Each search unit 2000 can receive this search information from the base unit 1000 by means of the wireless interface 2400. The search units 2000 may now choose to listen to all channels that are allotted to the mobile stations 3000 by the base unit 1000, to only one single channel or to any combination of channels. This is done by the logic unit 2200 by sending the proper instructions to the RF power measurement unit 2300. This allows the rescue team to better organize the search. The search units 2000 will now measure the RF signal strength which will be relayed to the search unit 2000 user by, e.g., the volume of an audio tone 2520 and/or by LED power indicator 2510.

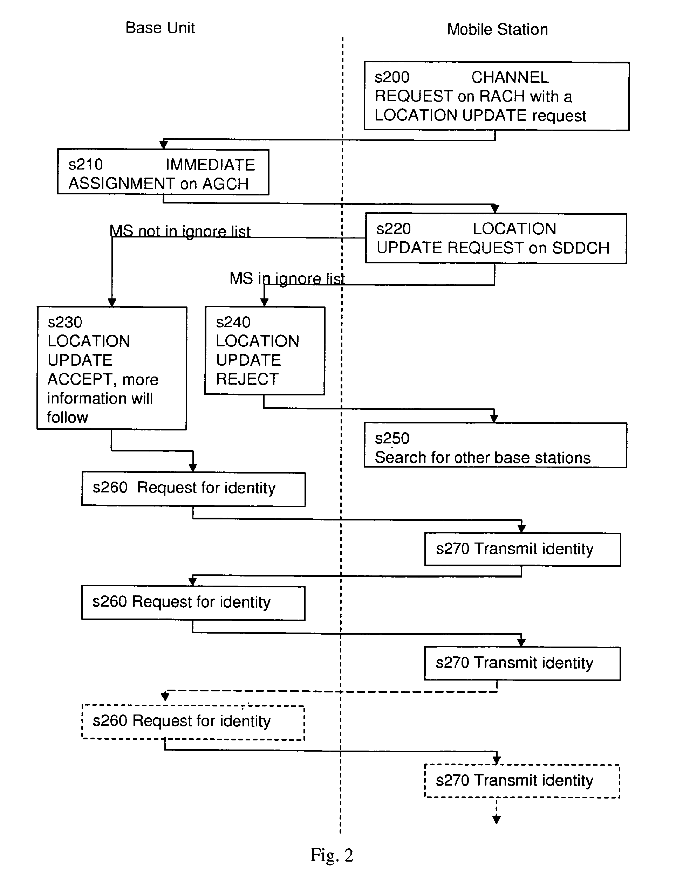

To further illustrate the invention, figure 2 shows a block diagram of the signaling between the base unit 1000 and a mobile station 3000.

The following steps that are shown in figure 2 are now carried out:
In s200 the mobile station 3000 sends a CHANNEL REQUEST message on the RACH channel to the base unit 1000 with the request LOCATION UPDATE.
The base unit 1000 responds in s210 with an IMMEDIATE ASSIGNMENT message over the AGCH channel. The channel granted is a SDCCH channel. The mobile station 3000 will now be in dedicated mode which means that the mobile station 3000 will not change base station.

In s220 the mobile station 3000 sends LOCATION UPDATE REQUEST message to the base unit 1000 over the SDDCH channel containing among other things its identity, which could be for instance the IMSI number or the TIMSI number.

Now one of two things will happen depending on a check of the mobile station's 3000 identity against a list of mobile stations 3000 to be ignored by the base unit 1000 (kept in the base unit's 1000 data bases 1400 list of units to ignore 1420). Throughout the search the identities of mobile stations 3000 in the search area are compared with the mobile stations 3000 in the ignore list 1420. If the mobile station's 3000 identity is in the ignore list 1420, a LOCATION UPDATE REJECT message is sent to the mobile station 3000. This is done in s240. The message states that this PLMN is not allowed for the mobile station 3000. The mobile station 3000 will then in s250 try to camp on another base station, i.e. its previous base station in the regular cellular network. Throughout the search communication with mobile stations 3000 that are registered in said ignore list 1420 will be terminated by the base unit 1000. This will be done continuously as new mobile stations 3000 are added to the ignore list 1420.

If the identity is not in the ignore list 1420 a LOCATION UPDATE ACCEPT message is sent to the mobile station 3000 in s230. In the message it is stated that more messages will follow.

Then connections between the base unit 1000 and the mobile stations 3000 are established, whereby the base unit 1000 and the mobile stations 3000 communicate in such a way that the mobile stations 3000 can be forced to continuously transmit radio bursts.The base unit 1000 may keep the mobile stations 3000 in dedicated mode by keep telling them that more information will follow thus making them searchable. The search units 2000 can during this time search for the mobile station's 3000 radio signal on the SDCCH in the search area.

One exemplifying way of achieving this is to have the base unit 1000 to transmit an IDENTITY REQUEST message to the mobile station 3000 in which it is specified that it is the IMSI number that is requested. This is done in s260. In s270 the mobile station 3000 then responds to the base unit 1000 with a IDENTITY RESPONSE message containing its IMSI number.

The last two steps, s260 and s270, can be repeated to ensure that the mobile station 3000 continuously transmits data and that it does not change mode to idle in which it can change base station. The rescue units will during this time look for the mobile stations 3000 in the search area. Communication between the base unit 1000 and the mobile stations 3000 is maintained until all mobile stations 3000 in the search area have been accounted for.

Similarly, the base unit 1000 may proceed in the LOCATION UPDATE sequence, which is defined in the GSM standard, to force continuous transmission of radio bursts after the mobile station 3000 has camped on the base unit 1000. This can for example be achieved by transmitting repetitive PAGING REQUEST messages to the mobile station/stations 3000 of interest, or other messages that trigger a response from the mobile stations 3000. In case of PAGING REQUEST, the mobile stations 3000 addressed will then send PAGING RESPONSE messages to the base unit 1000.

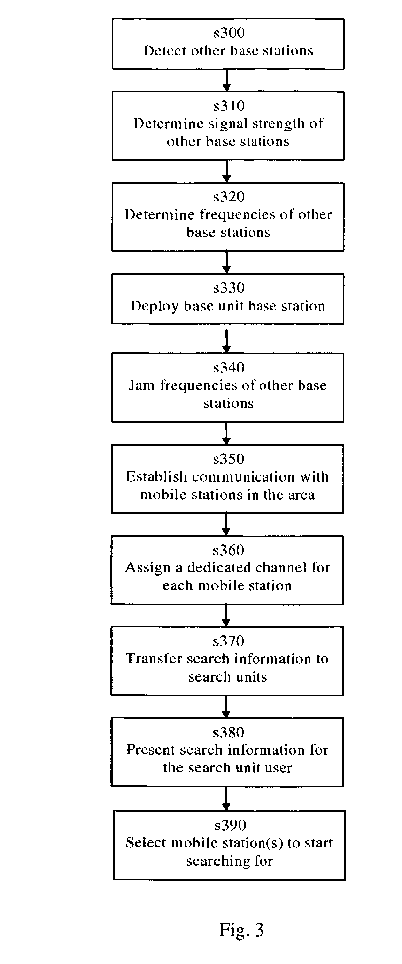

To further illustrate the invention, figure 3 shows an example of a general flow of the method for supporting the search for a mobile station.

The flow starts in s300 in which the base unit 1000 of the system detects the possible presence of active base stations of other cellular radio communications networks. If such base stations are present, the base unit 1000 determines their signal strength in s310 as well as the frequencies that are used by those base stations in s320.

In s330 a base station is deployed by the base unit 1000 according to the invention. After deployment, this base station is used to jam the above detected frequencies of other base stations. The next step is to establish communication with all mobile stations 3000 within range of the base unit 1000. This is done in s350. In s360 each mobile station 3000 is assigned a dedicated channel, which will be used throughout the rest of the search flow. Information that will be used during the search is transferred from the base unit 1000 to the search units 2000 in s370.

The search information is presented to the search unit 2000 user in s380, where after the search unit 2000 user selects one of several mobile stations 3000 to search for in s390.

In UMTS there is authentication of base stations which means that information from the operator is required in order to set up a "new" base station. Having this information it is possible to use a similar approach in case of UMTS. In addition, UMTS phones presently developed for the world market (excluding Japan and possibly some other countries) also support the GSM protocol, which means that the presented solution can be used for locating UMTS cellular phones. In addition to jamming all GSM stations all present UMTS Node-b's are jammed as well, this is described in "Real-time 3G UMTS terminal detection" by Vales-Alonso et al, IEEE Communications Letters, Vol.6, Issue 3, pp 123-125, 2002. This is done by using the public codes that are used for all UMTS node b's with a WCDMA transmitter. This forces the phone into GSM mode where it finds the base unit.

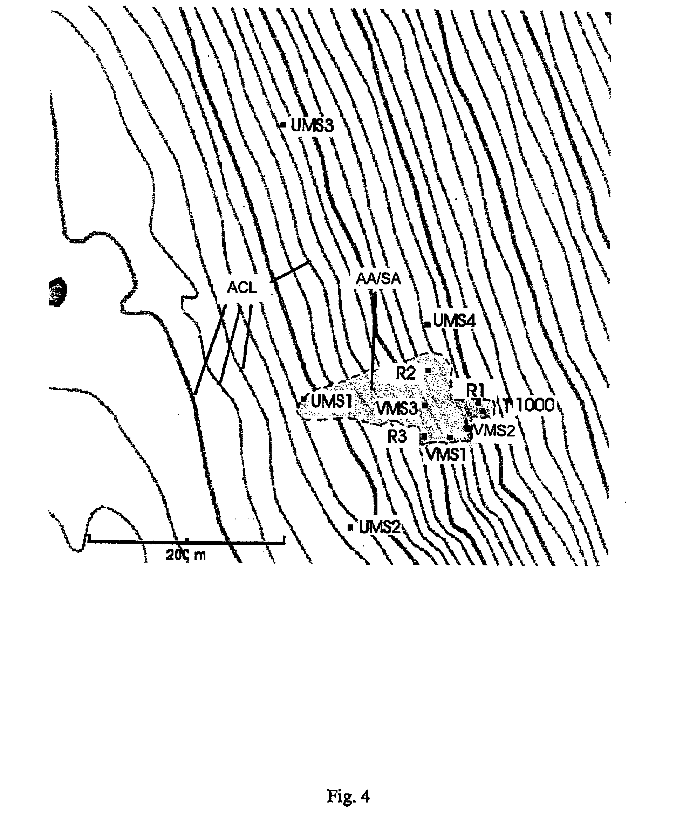

The use and action of the system will be described in an example scenario according to figure 4, which shows a map over an area where there has been an avalanche in which three victims are buried. Each victim carries a mobile station that is turned on. A rescue team that reaches the site is three persons strong, whereby each rescue team member carries a search unit as described with reference to figure 1 above. In addition to this there are four other mobile station users in the near vicinity.

In figure 4 the rescue team search units are represented by RU1, RU2 and RU3. The victim mobile stations are represented by VMS1, VMS2 and VMS3. Mobile stations not in avalanche are represented by UMS1, UMS2, UMS3 and UMS4. A base unit is represented by 1000. The highlighted grey area represented by AA/SA is the avalanche area, which will be searched in this scenario. The curved lines in figure 4 are altitude contour lines, of which some are represented by ACL. The altitude contour lines indicate a steep slope in the terrain.

The locations of the involved units are shown in figure 4.

The rescue crew arrives at the avalanche deposit and finds a suitable position for a base unit 1000 overlooking the entire search area. The base unit 1000, which has been described with reference to figure 1 above, is started by an operator in order to initially detect base stations belonging to possible existing cellular communication networks that might be active in the area.

In this scenario, other cellular communication networks are active in the area, so the base unit 1000 then continues to jam the detected base stations.

All mobile stations, except UMS3 which is to far away from the base unit 1000, will at this point be affected by the jamming. The jamming will cause a downlink failure which will trigger a cell reselection from the mobile stations. This takes at most 5.3 seconds. UMS1 is, at the time the base unit 1000 starts jamming, involved in a phone call that will be terminated.

At the same time as the jamming begins, functionality of a new base station is emulated by the base unit 1000 at a frequency which is not used by other base stations in the area. All mobile stations except UMS3 will try to synchronize to this new base station as soon as they declared their downlink failure with their original base station. The mobile stations see that this base station has a different LAI number than their previous LAI, and this will trigger a location update. The affected mobile stations now request a data channel from the base unit 1000 which assigns one data channel to each mobile station. The mobile stations then send their location update request messages, which contain their identity. The jamming is now aborted after being active for just less than 8 seconds.

The base unit 1000 now has contact with all mobile stations of interest. In order to exclude unwanted mobile stations, the base unit 1000 now sends a broadcast SMS to all phones asking the users to turn off their phones because of an ongoing avalanche rescue operation in progress. Alternatively, a broadcast call can be used to the same effect. Mobile station users can now by restarting their phones acquire a connection to their regular base stations. All the phones now communicating with the base unit 1000 will now receive the SMS.

The three avalanche victims are unable or unwilling to turn off their phones and so is UMS4. UMS1 and UMS2 are however restarted. They will now be removed from the list of present phones, as has been described above with reference to figure 2, and reconnects to their preferred base station.

The rescue crew now starts scanning the search area with the aid of the search units. Messages that need to be exchanged between the search unit operators during the search can be transferred orally, for instance by means of the search unit, which can comprise walkie-talkie, push-to-talk, or similar functionality. This functionality can for instance be incorporated into the wireless interface 2400 that has been described above with reference to figure 1. Also, the wireless interface 1300 in the base unit 1000 may comprise a similar function.

RU1 detects the signal from VMS1 and RU1 is set by its operator to listen for only VMS1. RU2 now also detects VMS1 but when the operators of the other search units are asked if any of them are searching for VMS 1, the operator of RU1 says that he/she already is searching for that victim and that victim is excluded by the operator of RU2 from his/her list of measured mobile stations. This is achieved by means of the user interface 2500 in the search unit. Instead UMS4 is found by RU2 and RU2 is set by its operator to listen for only UMS4. VMS2 is detected by RU3 and RU3 is set by its operator to listen only for VMS2. RU2 searches for UMS4, which is found by the operator of RU2 to not be a victim. Adding UMS4 to an ignore list 1420, as has been described above with reference to figure 1, is then inititiated by the operator of RU2, by transferring data informing of the located UMS4 to the base unit 1000. The base unit 1000 updates the ignore list 1420 and the search information, and transfers the updated search information to the search units that are carried by the rescue team members. The operator of RU2 is now told by his colleagues that only VMS3 is not being looked for. The base unit 1000 closes the connection to UMS4 which now searches for and finds its old base station.

The rescue crew now proceeds to find their respective victims.

Once a victim is rescued, its mobile station is added to the ignore list 1420 in the base unit 1000 in order to make the search of the remaining victims as efficient as possible. The rescue crew continues the search until all victims are located.

Examples of further advantages that are provided by the invention include:
- the system can establish and maintain communication with any unknown mobile station, also when there are other base stations in the vicinity;
- the system is independent of possible cellular network infrastructure and operators, and works both where there is cellular coverage and where there is not;
- the mobile stations can be forced to transmit often enough (at least several times per second) to make efficient manual search possible;
- jamming of possible other active base stations is only done during an initial short period of time after which the system will work without interfering with other radio traffic;
- the system can call or send informative SMS messages urging the user to restart their mobile stations for it to work properly again, which means that mobile stations not carried by victims can be removed from the search and that the disturbance to regular cellular radio traffic can be kept to a minimum;
- the system will, based on the size of the search area and the maximum detected base station power, determine an optimum power with which to jam present base stations without transmitting stronger signals than necessary, which keeps interference with regular traffic at a minimum level;
- single mobile stations or groups of mobile stations can be distinguished from others when searching;
- the system will within a few seconds from being activated give rescue workers a figure of how many phones (possible victims) that are present in the area;
- the use of GSM frequencies allows for high directivity antennas to be used determining the direction to the source. Other avalanche rescue systems use much lower frequencies making directional estimates much harder and much less accurate; and
- the system is flexible in that acquired mobile stations can be released at any time while keeping others locked to the base unit.

According to one embodiment, the invention relates to a method comprising the step 300 of detecting base stations of possible other active cellular radio communications networks in the search area with the base unit 1000.

According to another embodiment, the method comprises the step 310 of determining the signal strength of possible other active cellular radio communications networks in the search area with the base unit 1000.

According to a further embodiment, the method comprises the step 320 of determining, in the base unit 1000, which frequencies that are used by the base stations of possible other cellular radio communications networks that are active in the search area.

According to a still further embodiment, the method comprises the step 340 of jamming the above determined frequencies with the base unit 1000 so that mobile stations 3000 in the search area can not communicate with said other cellular radio communications networks.

According to still another embodiment, the method comprises the step of establishing communication between the base unit 1000 and the mobile stations 3000 in the search area by the base unit 1000 transmitting a RF signal with a frequency that differs from the frequencies transmitted by the other cellular radio communications network.

According to a still further embodiment, the method comprises the step of maintaining communication between the base unit 1000 and the mobile stations 3000 in the search area by repeatedly performing the following two steps: sending identity or paging requests from the base unit 1000 to the mobile stations 3000 in the search area; and receiving, in the base unit 1000, the identity or paging request standard responses from the mobile stations 3000 in the search area.

According to one embodiment, the invention relates to a system wherein the base unit 1000 is adapted to detect base stations of possible other active cellular radio communications networks in the search area.

According to a further embodiment, the invention relates to a system wherein the base unit 1000 is adapted to determine the signal strength of possible other active cellular radio communications networks in the search area.

According to another embodiment, the invention relates to a system wherein the base unit 1000 is adapted to determine which frequencies that are used by the base stations of possible other cellular radio communications networks that are active in the search area.

According to a still further embodiment, the invention relates to a system wherein the base unit 1000 is adapted to jam the above determined frequencies so that mobile stations 3000 in the search area can not communicate with said other cellular radio communications networks.

According to still another embodiment, the invention relates to a system wherein the base unit 1000 is adapted to establish communication between the base unit 1000 and the mobile stations 3000 in the search area by transmitting a RF signal with a frequency that differs from the frequencies transmitted by the other cellular radio communications network.

According to another embodiment, the invention relates to a system wherein communication is maintained between the base unit 1000 and the mobile stations 3000 in the search area by the base unit 1000 being adapted to force the mobile stations 3000 to continuously transmit radio bursts.

According to still another embodiment, the invention relates to a system wherein the base unit 1000 is adapted to transmit repetitive messages that trigger a response from the mobile stations 3000 in the search area, so as to prevent the mobile stations 3000 from entering idle mode in which they would be able to change base station.

According to a further embodiment, the invention relates to a system wherein the base unit 1000 is adapted to maintain communication with the mobile stations 3000 in the search area by repeatedly performing the following two steps: sending identity or paging requests to the mobile stations 3000 in the search area; and receiving the identity or paging request standard responses from the mobile stations 3000 in the search area.

Although the invention has been disclosed above with reference to examples based on the accompanying drawings, it is obvious that the invention is not restricted thereto, but may vary in many ways within the scope of the accompanying claims.

From the detailed description above that mainly relates to use with the GSM standard, including the PCS and DCS bands, the skilled person will realize that the invention may be applicable for use also with other standards, such as WCDMA, CDMA2000, and IS-95.

## Claims

1. A method involving at least one search unit (2000) that comprises an antenna arrangement (2100) for supporting a search for at least one mobile station (3000) operating in the radio frequency domain; and
a base unit (1000) that is adapted to communicate with mobile stations (3000) within an area to be searched;
**characterised by** comprising the following steps
identifying mobile stations (3000) in the search area and dedicating communication channels for said mobile stations (3000) by means of base station functionality in the base unit (1000), by establishing communication between the base unit (1000) and the mobile stations (3000) in the search area;
establishing search information in the base unit (1000) regarding each of the mobile stations (3000) in the search area, whereby the search information comprises a mobile station identity and a corresponding dedicated communication channel for each mobile station (3000) in the search area;
transferring the search information concerning the mobile stations (3000) in the search area from the base unit (1000) to the at least one search unit (2000);
presenting the search information concerning at least one of the mobile stations (3000) in the search area in the at least one search unit (2000); and
initiating a search based on the presented search information for at least one of the mobile stations (3000) in the search area with the at least one search unit (2000).

2. A method according to claim 1, **characterised in that** communication is maintained between the base unit (1000) and the mobile stations (3000) in the search area by the base unit (1000) forcing the mobile stations (3000) to continuously transmit radio bursts.

3. A method according to claim 2, **characterised in that** the base unit (1000) transmits repetitive messages that trigger a response from the mobile stations (3000) in the search area, so as to prevent the mobile stations (3000) from entering idle mode in which they would be able to change base station.

4. A base unit (1000) for supporting a search for at least one mobile station (3000) operating in the radio frequency domain, the base unit (1000) comprising an antenna arrangement (1200), radio means (1200), a user interface (1500), a wireless interface (1300), a database (1400), and computer means (1100), whereby the base unit (1000) is adapted to communicate with mobile stations (3000) operating in the radio frequency domain within an area to be searched;
**characterised in that**
the base unit's (1000) computer means (1100) is adapted to identify mobile stations (3000) in the search area and dedicate communication channels for said mobile stations (3000) by means of base station functionality, by establishing communication between the base unit (1000) and the mobile stations (3000) in the search area by means of the antenna arrangement and the radio means (1200);
the base unit (1000) is adapted to establish search information in the database (1400) regarding each of the mobile stations (3000) in the search area, whereby the search information comprises a mobile station identity and a dedicated channel for each mobile station (3000) in the search area;
and
the base unit (1000) is adapted to transfer the search information concerning the mobile stations (3000) in the search area to at least one search unit (2000) by means of the wireless interface (1300).

5. A base unit (1000) according to claim 4, **characterised in that**
it is adapted to detect base stations of possible other active cellular radio communications networks in the search area.

6. A base unit (1000) according to claim 5, **characterised in that**
it is adapted to determine the signal strength of possible other active cellular radio communications networks in the search area.

7. A base unit (1000) according to any of claims 4-6, **characterised in that**
it is adapted to determine which frequencies that are used by the base stations of possible other cellular radio communications networks that are active in the search area.

8. A base unit (1000) according to claim 7, **characterised in that**
it is adapted to jam the above determined frequencies so that mobile stations (3000) in the search area can not communicate with said other cellular radio communications networks.

9. A base unit (1000) according to claim 6, **characterised in that**
it is adapted to establish communication with the mobile stations (3000) in the search area by transmitting a RF signal with a frequency that differs from the frequencies transmitted by the other cellular radio communications network.

10. A base unit according to any one claims 4-9, **characterised in that** communication is maintained between the base unit (1000) and the mobile stations (3000) in the search area by the base unit (1000) being adapted to force the mobile stations (3000) to continuously transmit radio bursts.

11. A base unit according to claim 10, **characterised in that** the base unit (1000) is adapted to transmit repetitive messages that trigger a response from the mobile stations (3000) in the search area, so as to prevent the mobile stations (3000) from entering idle mode in which they would be able to change base station.

12. A base unit (1000) according to claim 11, **characterised in that**
it is adapted to maintain communication with the mobile stations (3000) in the search area by repeatedly performing the following two steps:
sending identity or paging requests to the mobile stations (3000) in the search area;
receiving the identity or paging request standard responses from the mobile stations (3000) in the search area.

13. A search unit (2000) for supporting a search for at least one mobile station (3000) operating in the radio frequency domain, the search unit (2000) comprising an antenna arrangement (2100), a user interface (2500), a wireless interface (2400), and logic means (2200);
**characterised in that**
the search unit (2000) is adapted to receive search information concerning the mobile stations (3000) in a search area from a base unit (1000) by means of the wireless interface (2400), wherein the search information comprises a mobile station identity and a dedicated communication channel for each mobile station in the search area;
the search unit (2000) is adapted to present search information concerning at least one of the mobile stations (3000) in the search area by means of the user interface (2500);
and
the search unit (2000) is adapted to initiate and support a search based on the presented search information for at least one of the mobile stations (3000) in the search area by means of the antenna arrangement (2100) and the logic means (2200) that is adapted to receive control signals from the user interface (2500), wherein the search involves causing the search unit (2000) to listen to at least one of the dedicated communication channels included in the search information.

14. A search unit (2000) according to claim 13, **characterised in that**
it is adapted to transfer search results and other information to the base unit (1000) by means of the wireless interface (2400).

15. A system for supporting a search for at least one mobile station (3000) operating in the radio frequency domain, the system comprising:
a transportable base unit (1000) that comprises an antenna arrangement (1200), radio means (1200), a user interface (1500), a wireless interface (1300), a database (1400), and computer means (1100), whereby the base unit (1000) is adapted to communicate with mobile stations (3000) within an area to be searched;
and
at least one search unit (2000) that comprises an antenna arrangement (2100), a user interface (2500), a wireless interface (2400), and logic means (2200);
**characterised in that**
the base unit's (1000) computer means (1100) is adapted to identify mobile stations (3000) in the search area and dedicate communication channels for said mobile stations (3000) by means of base station functionality, by establishing communication between the base unit (1000) and the mobile stations (3000) in the search area by means of the antenna arrangement and the radio means (1200);
the base unit (1000) is adapted to establish search information in the database (1400) regarding each of the mobile stations (3000) in the search area, whereby the search information comprises a mobile station identity and a dedicated communication channel for each mobile station (3000) in the search area;
the base unit (1000) is adapted to transfer the search information concerning the mobile stations (3000) in the search area to the at least one search unit (2000) by means of the wireless interface (1300);
the at least one search unit (2000) is adapted to receive the search information concerning the mobile stations (3000) in the search area from the base unit (1000) by means of the wireless interface (2400);
the at least one search unit (2000) is adapted to present search information concerning at least one of the mobile stations (3000) in the search area by means of the user interface (2500);
and
the at least one search unit (2000) is adapted to initiate and support a search based on the presented search information for at least one of the mobile stations (3000) in the search area by means of the antenna arrangement (2100) and the logic means (2200) that is adapted to receive control signals from the user interface (2500).

## Patentansprüche

1. Verfahren unter Verwendung mindestens einer Sucheinheit (2000), die eine Antennenanordnung (2100) aufweist, zur Unterstützung einer Suche nach mindestens einer im Hochfrequenzbereich arbeitenden Mobilstation (3000); und
einer Basiseinheit (1000), die eingerichtet ist, mit Mobilstationen (3000) innerhalb eines abzusuchenden Gebiets zu kommunizieren;
**dadurch gekennzeichnet, dass** es die folgenden Schritte aufweist:
Identifizieren von Mobilstationen (3000) in dem Suchgebiet und Zuweisen von Kommunikationskanälen für die Mobilstationen (3000) mit Hilfe einer Basisstationsfunktionalität in der Basiseinheit (1000) durch Aufbauen einer Kommunikation zwischen der Basiseinheit (1000) und den Mobilstationen (3000) in dem Suchgebiet;
Erstellen von Suchinformation, betreffend jede der Mobilstationen (3000) in dem Suchgebiet, in der Basiseinheit (1000) wobei die Suchinformation eine Mobilstationsidentität und einen entsprechenden zugewiesenen Kommunikationskanal für jede Mobilstation (3000) in dem Suchgebiet aufweist;
Senden der Suchinformation, betreffend die Mobilstationen (3000) in dem Suchgebiet, von der Basiseinheit (1000) zu der mindestens einen Sucheinheit (2000);
Vorzeigen der Suchinformation, betreffend die mindestens eine der Mobilstationen (3000) in dem Suchgebiet, in der mindestens einen Sucheinheit (2000); und
Initiieren einer auf der vorgezeigten Suchinformation basierenden Suche nach mindestens einer der Mobilstationen (3000) in dem Suchgebiet mit der mindestens einen Sucheinheit (2000).

2. Verfahren nach Anspruch 1, **dadurch gekennzeichnet, dass** durch die Basiseinheit (1000), die die Mobilstationen (3000) zu einem kontinuierlichen Senden von Funkbursts zwingt, eine Kommunikation zwischen der Basiseinheit (1000) und den Mobilstationen (3000) in dem Suchgebiet aufrechterhalten wird.

3. Verfahren nach Anspruch 2, **dadurch gekennzeichnet, dass** die Basiseinheit (1000) sich wiederholende Meldungen sendet, die aus den Mobilstationen (3000) in dem Suchgebiet eine Antwort hervorrufen, um so zu verhindern, dass die Mobilstationen (3000) in einen Ruhemodus eintreten, in welchem sie in der Lage wären, die Basisstation zu wechseln.

4. Basiseinheit (1000) zur Unterstützung einer Suche nach mindestens einer im Hochfrequenzbereich arbeitenden Mobilstation (3000), wobei die Basiseinheit (1000) eine Antennenanordnung (1200), Funkeinrichtungen (1200), eine Benutzerschnittstelle (1500), eine Funkschnittstelle (1300), eine Datenbank (1400) und Computereinrichtungen (1100) aufweist, wobei die Basiseinheit (1000) eingerichtet ist, mit Mobilstationen (3000), die in dem Hochfrequenzbereich arbeiten, innerhalb eines abzusuchenden Gebiets zu kommunizieren;
**dadurch gekennzeichnet, dass**
die Computereinrichtung (1100) der Basiseinheit (1000) eingerichtet ist, durch Aufbauen einer Kommunikation zwischen der Basiseinheit (1000) und den Mobilstationen (3000) in dem Suchgebiet mit Hilfe der Antennenanordnung und der Funkeinrichtung (1200) Mobilstationen (3000) in dem Suchgebiet zu identifizieren und mit Hilfe einer Basisstationsfunktionalität den Mobilstationen (3000) Kommunikationskanäle zuzuweisen;
die Basiseinheit (1000) eingerichtet ist, in der Datenbank (1400) Suchinformation, betreffend jede der Mobilstationen (3000) in dem Suchgebiet, zu erstellen, wobei die Suchinformation eine Mobilstationsidentität und einen zugewiesenen Kanal für jede Mobilstation (3000) in dem Suchgebiet aufweist; und
die Basiseinheit (1000) eingerichtet ist, mit Hilfe der Funkschnittstelle (1300) die Suchinformation, betreffend die Mobilstationen (3000) in dem Suchgebiet, zu mindestens einer Sucheinheit (2000) zu senden.

5. Basiseinheit (1000) nach Anspruch 4, **dadurch gekennzeichnet, dass** sie eingerichtet ist, Basisstationen möglicher anderer aktiver zellularer Funkkommunikationsnetze in dem Suchgebiet zu detektieren.

6. Basiseinheit (1000) nach Anspruch 5, **dadurch gekennzeichnet, dass** sie eingerichtet ist, die Signalstärke möglicher anderer aktiver zellularer Funkkommunikationsnetze in dem Suchgebiet zu bestimmen.

7. Basiseinheit (1000) nach einem der Ansprüche 4 bis 6, **dadurch gekennzeichnet, dass** sie eingerichtet ist, Frequenzen zu bestimmen, welche von den Basisstationen möglicher anderer aktiver zellularer Funkkommunikationsnetze, die in dem Suchgebiet aktiv sind, benutzt werden.

8. Basiseinheit (1000) nach Anspruch 7, **dadurch gekennzeichnet, dass** sie eingerichtet ist, die oben bestimmten Frequenzen zu blockieren, so dass Mobilstationen (3000) in dem Suchgebiet nicht mit den anderen zellularen Funkkommunikationsnetzen kommunizieren können.

9. Basiseinheit (1000) nach Anspruch 6, **dadurch gekennzeichnet, dass** sie eingerichtet ist, durch Senden eines HF-Signals, dessen Frequenz sich von den Frequenzen unterscheidet, die von den anderen zellularen Funkkommunikationsnetzen gesendet werden, eine Kommunikation mit den Mobilstationen (3000) in dem Suchgebiet aufzubauen.

10. Basiseinheit nach einem der Ansprüche 4 bis 9, **dadurch gekennzeichnet, dass** durch die Basiseinheit (1000), die eingerichtet ist, die Mobilstationen (3000) zu einem kontinuierlichen Senden von Funkbursts zu zwingen, eine Kommunikation zwischen der Basiseinheit (1000) und den Mobilstationen (3000) in dem Suchgebiet aufrechterhalten wird.

11. Basiseinheit nach Anspruch 10, **dadurch gekennzeichnet, dass** die Basiseinheit (1000) eingerichtet ist, sich wiederholende Meldungen zu senden, die aus den Mobilstationen (3000) in dem Suchgebiet eine Antwort hervorrufen, um so zu verhindern, dass die Mobilstationen (3000) in einen Ruhemodus eintreten, in welchem sie in der Lage wären, die Basisstation zu wechseln.

12. Basiseinheit (1000) nach Anspruch 11, **dadurch gekennzeichnet, dass** sie eingerichtet ist, durch Durchführen der folgenden zwei Schritte eine Kommunikation mit den Mobilstationen (3000) in dem Suchgebiet aufrechtzuerhalten:
Senden von Identitäts- oder Rufanfragen zu den Mobilstationen (3000) in dem Suchgebiet;
Empfangen der Standardantworten auf die Identitäts- oder Rufanfrage aus den Mobilstationen (3000) in dem Suchgebiet.

13. Sucheinheit (2000) zur Unterstützung einer Suche nach mindestens einer im Hochfrequenzbereich arbeitenden Mobilstation (3000), wobei die Sucheinheit (2000) eine Antennenanordnung (2100), eine Benutzerschnittstelle (2500), eine Funkschnittstelle (2400) und Logikeinrichtungen (2200) aufweist;
**dadurch gekennzeichnet, dass**
die Sucheinheit (2000) eingerichtet ist, mit Hilfe der Funkschnittstelle (2400) Suchinformation, betreffend die Mobilstationen (3000) in einem Suchgebiet, aus einer Basiseinheit (1000) zu empfangen, wobei die Suchinformation eine Mobilstationsidentität und einen zugewiesenen Kommunikationskanal für jede Mobilstation in dem Suchgebiet aufweist;
die Sucheinheit (2000) eingerichtet ist, mit Hilfe der Benutzerschnittstelle (2500) Suchinformation, betreffend mindestens eine der Mobilstationen (3000) in dem Suchgebiet, vorzuzeigen; und
die Sucheinheit (2000) eingerichtet ist, mit Hilfe der Antennenanordnung (2100) und der Logikeinrichtung (2200), die eingerichtet ist, Steuersignale aus der Benutzerschnittstelle (2500) zu empfangen, eine auf der vorgezeigten Suchinformation basierende Suche nach mindestens einer der Mobilstationen (3000) in dem Suchgebiet zu initiieren und zu unterstützen.

14. Sucheinheit (2000) nach Anspruch 13, **dadurch gekennzeichnet, dass** sie eingerichtet ist, mit Hilfe der Funkschnittstelle (2400) Suchergebnisse und andere Information zu der Basiseinheit (1000) zu senden.

15. System zur Unterstützung einer Suche nach mindestens einer im Hochfrequenzbereich arbeitenden Mobilstation (3000), wobei das System aufweist:
eine tragbare Basiseinheit (1000), die eine Antennenanordnung (1200), Funkeinrichtungen (1200), eine Benutzerschnittstelle (1500), eine Funkschnittstelle (1300), eine Datenbank (1400) und Computereinrichtungen (1100) aufweist, wobei die Basiseinheit (1000) eingerichtet ist, mit Mobilstationen (3000) innerhalb eines abzusuchenden Gebiets zu kommunizieren; und
mindestens eine Sucheinheit (2000), die eine Antennenanordnung (2100), eine Benutzerschnittstelle (2500), eine Funkschnittstelle (2400) und Logikeinrichtungen (2200) aufweist;
**dadurch gekennzeichnet, dass**
die Computereinrichtung (1100) der Basiseinheit (1000) eingerichtet ist, durch Aufbauen einer Kommunikation zwischen der Basiseinheit (1000) und den Mobilstationen (3000) in dem Suchgebiet mit Hilfe der Antennenanordnung und der Funkeinrichtung (1200) Mobilstationen (3000) in dem Suchgebiet zu identifizieren und mit Hilfe einer Basisstationsfunktionalität den Mobilstationen (3000) Kommunikationskanäle zuzuweisen;
die Basiseinheit (1000) eingerichtet ist, in der Datenbank (1400) Suchinformation, betreffend jede der Mobilstationen (3000) in dem Suchgebiet, zu erstellen, wobei die Suchinformation eine Mobilstationsidentität und einen zugewiesenen Kommunikationskanal für jede Mobilstation (3000) in dem Suchgebiet aufweist;
die Basiseinheit (1000) eingerichtet ist, mit Hilfe der Funkschnittstelle (1300) die Suchinformation, betreffend die Mobilstationen (3000) in dem Suchgebiet, zu der mindestens einen Sucheinheit (2000) zu senden;
die mindestens eine Sucheinheit (2000) eingerichtet ist, mit Hilfe der Funkschnittstelle (2400) die Suchinformation, betreffend die Mobilstationen (3000) in dem Suchgebiet, aus der Basiseinheit (1000) zu empfangen;
die mindestens eine Sucheinheit (2000) eingerichtet ist, Suchinformation, betreffend die mindestens eine der Mobilstationen (3000) in dem Suchgebiet, mit Hilfe der Benutzerschnittstelle (2500) vorzuzeigen; und
die mindestens eine Sucheinheit (2000) eingerichtet ist, mit Hilfe der Antennenanordnung (2100) und der Logikeinrichtung (2200), die eingerichtet ist, Steuersignale aus der Benutzerschnittstelle (2500) zu empfangen, eine auf der vorgezeigten Suchinformation basierende Suche nach mindestens einer der Mobilstationen (3000) in dem Suchgebiet zu initiieren und zu unterstützen.

## Revendications

1. Procédé impliquant au moins une unité de recherche (2000) qui comprend un agencement d'antenne (2100) pour prendre en charge une recherche d'au moins une station mobile (3000) fonctionnant dans le domaine radiofréquence ; et
une unité de base (1000) qui est adaptée pour communiquer avec des stations mobiles (3000) dans une zone de recherche ;
**caractérisé en ce qu'**il comprend les étapes suivantes consistant à
identifier les stations mobiles (3000) dans la zone de recherche et dédier des canaux de communication pour lesdites stations mobiles (3000) au moyen d'une fonctionnalité de station de base dans l'unité de base (1000), en établissant une communication entre l'unité de base (1000) et les stations mobiles (3000) dans la zone de recherche ;
établir des informations de recherche dans l'unité de base (1000) concernant chacune des stations mobiles (3000) dans la zone de recherche, où les informations de recherche comprennent une identité de station mobile et un canal de communication dédié correspondant pour chaque station mobile (3000) dans la zone de recherche ;
transférer les informations de recherche concernant les stations mobiles (3000) dans la zone de recherche de l'unité de base (1000) à ladite au moins une unité de recherche (2000) ;
présenter les informations de recherche concernant au moins l'une des stations mobiles (3000) dans la zone de recherche dans ladite au moins une unité de recherche (2000) ; et
lancer une recherche sur la base des informations de recherche présentées pour au moins l'une des stations mobiles (3000) dans la zone de recherche avec ladite au moins une unité de recherche (2000).

2. Procédé selon la revendication 1, **caractérisé en ce que** la communication est maintenue entre l'unité de base (1000) et les stations mobiles (3000) dans la zone de recherche par l'unité de base (1000) forçant les stations mobiles (3000) à émettre continûment des salves radio.

3. Procédé selon la revendication 2, **caractérisé en ce que** l'unité de base (1000) émet des messages répétitifs qui déclenchent une réponse des stations mobiles (3000) dans la zone de recherche, de manière à empêcher que les stations mobiles (3000) n'entrent dans un mode inoccupé dans lequel elles seraient capables de changer de station de base.

4. Unité de base (1000) pour prendre en charge une recherche d'au moins une station mobile (3000) fonctionnant dans le domaine radiofréquence, l'unité de base (1000) comprenant un agencement d'antenne (1200), des moyens radio (1200), une interface utilisateur (1500), une interface sans fil (1300), une base de données (1400) et des moyens formant ordinateur (1100), où l'unité de base (1000) est adaptée pour communiquer avec des stations mobiles (3000) fonctionnant dans le domaine radiofréquence dans une zone de recherche ;
**caractérisée en ce que**
les moyens formant ordinateur (1100) de l'unité de base (1000) sont adaptés pour identifier les stations mobiles (3000) dans la zone de recherche et dédier des canaux de communication pour lesdites stations mobiles (3000) au moyen d'une fonctionnalité de station de base, en établissant une communication entre l'unité de base (1000) et les stations mobiles (3000) dans la zone de recherche au moyen de l'agencement d'antenne et des moyens radio (1200) ;
l'unité de base (1000) est adaptée pour établir des informations de recherche dans la base de données (1400) concernant chacune des stations mobiles (3000) dans la zone de recherche, où les informations de recherche comprennent une identité de station mobile et un canal dédié pour chaque station mobile (3000) dans la zone de recherche ;
et
l'unité de base (1000) est adaptée pour transférer les informations de recherche concernant les stations mobiles (3000) dans la zone de recherche à au moins une unité de recherche (2000) au moyen de l'interface sans fil (1300).

5. Unité de base (1000) selon la revendication 4, **caractérisée en ce que**
elle est adaptée pour détecter les stations de base d'autres réseaux de radiocommunication cellulaires actifs possibles dans la zone de recherche.

6. Unité de base (1000) selon la revendication 5, **caractérisée en ce que**
elle est adaptée pour déterminer l'intensité de signal d'autres réseaux de radiocommunication cellulaires actifs possibles dans la zone de recherche.

7. Unité de base (1000) selon l'une quelconque des revendications 4 à 6, **caractérisée en ce que**
elle est adaptée pour déterminer les fréquences qui sont utilisées par les stations de base d'autres réseaux de radiocommunication cellulaires possibles qui sont actifs dans la zone de recherche.

8. Unité de base (1000) selon la revendication 7, **caractérisée en ce que**
elle est adaptée pour brouiller les fréquences déterminées ci-dessus de sorte que les stations mobiles (3000) dans la zone de recherche ne puissent pas communiquer avec lesdits autres réseaux de radiocommunication cellulaires.

9. Unité de base (1000) selon la revendication 6, **caractérisée en ce que**
elle est adaptée pour établir une communication avec les stations mobiles (3000) dans la zone de recherche en émettant un signal RF avec une fréquence qui diffère des fréquences émises par les autres réseaux de radiocommunication cellulaires.

10. Unité de base selon l'une quelconque des revendications 4 à 9, **caractérisée en ce que** la communication est maintenue entre l'unité de base (1000) et les stations mobiles (3000) dans la zone de recherche par l'unité de base (1000) qui est adaptée pour forcer les stations mobiles (3000) à émettre continûment des salves radio.

11. Unité de base selon la revendication 10, **caractérisée en ce que** l'unité de base (1000) est adaptée pour émettre des messages répétitifs qui déclenchent une réponse des stations mobiles (3000) dans la zone de recherche, de manière à empêcher les stations mobiles (3000) d'entrer dans un mode inoccupé dans lequel elles seraient capables de changer de station de base.

12. Unité de base (1000) selon la revendication 11, **caractérisée en ce que**
elle est adaptée pour maintenir la communication avec les stations mobiles (3000) dans la zone de recherche en effectuant de manière répétée les deux étapes suivantes consistant à :
envoyer des demandes d'identité ou de messagerie aux stations mobiles (3000) dans la zone de recherche ;
recevoir les réponses standard aux demandes d'identité ou de messagerie des stations mobiles (3000) dans la zone de recherche.

13. Unité de recherche (2000) pour prendre en charge une recherche d'au moins une station mobile (3000) fonctionnant dans le domaine radiofréquence, l'unité de recherche (2000) comprenant un agencement d'antenne (2100), une interface utilisateur (2500), une interface sans fil (2400) et des moyens logiques (2200) ;
**caractérisée en ce que**
l'unité de recherche (2000) est adaptée pour recevoir des informations de recherche concernant les stations mobiles (3000) dans une zone de recherche d'une unité de base (1000) au moyen de l'interface sans fil (2400), dans laquelle les informations de recherche comprennent une identité de station mobile et un canal de communication dédié pour chaque station mobile dans la zone de recherche ;
l'unité de recherche (2000) est adaptée pour présenter les informations de recherche concernant au moins l'une des stations mobiles (3000) dans la zone de recherche au moyen de l'interface utilisateur (2500) ;
et
l'unité de recherche (2000) est adaptée pour lancer et prendre en charge une recherche sur la base des informations de recherche présentées pour au moins l'une des stations mobiles (3000) dans la zone de recherche au moyen de l'agencement d'antenne (2100) et des moyens logiques (2200) qui sont adaptés pour recevoir des signaux de commande de l'interface utilisateur (2500), dans laquelle la recherche implique d'amener l'unité de recherche (2000) à écouter au moins l'un des canaux de communication dédiés inclus dans les informations de recherche.

14. Unité de recherche (2000) selon la revendication 13, **caractérisée en ce que**
elle est adaptée pour transférer les résultats de recherche et d'autres informations à l'unité de base (1000) au moyen de l'interface sans fil (2400).

15. Système pour prendre en charge une recherche d'au moins une station mobile (3000) fonctionnant dans le domaine radiofréquence, le système comprenant :
une unité de base (1000) transportable qui comprend un agencement d'antenne (1200), des moyens radio (1200), une interface utilisateur (1500), une interface sans fil (1300), une base de données (1400) et des moyens formant ordinateur (1100), où l'unité de base (1000) est adaptée pour communiquer avec les stations mobiles (3000) dans une zone de recherche ;
et
au moins une unité de recherche (2000) qui comprend un agencement d'antenne (2100), une interface utilisateur (2500), une interface sans fil (2400) et des moyens logiques (2200) ;
**caractérisé en ce que**
les moyens formant ordinateur (1100) de l'unité de base (1000) sont adaptés pour identifier les stations mobiles (3000) dans la zone de recherche et dédier des canaux de communication pour lesdites stations mobiles (3000) au moyen d'une fonctionnalité de station de base, en établissant une communication entre l'unité de base (1000) et les stations mobiles (3000) dans la zone de recherche au moyen de l'agencement d'antenne et des moyens radio (1200) ;
l'unité de base (1000) est adaptée pour établir des informations de recherche dans la base de données (1400) concernant chacune des stations mobiles (3000) dans la zone de recherche, où les informations de recherche comprennent une identité de station mobile et un canal de communication dédié pour chaque station mobile (3000) dans la zone de recherche ;
l'unité de base (1000) est adaptée pour transférer les informations de recherche concernant les stations mobiles (3000) dans la zone de recherche à ladite au moins une unité de recherche (2000) au moyen de l'interface sans fil (1300) ;
ladite au moins une unité de recherche (2000) est adaptée pour recevoir les informations de recherche concernant les stations mobiles (3000) dans la zone de recherche de l'unité de base (1000) au moyen de l'interface sans fil (2400) ;
ladite au moins une unité de recherche (2000) est adaptée pour présenter les informations de recherche concernant au moins l'une des stations mobiles (3000) dans la zone de recherche au moyen de l'interface utilisateur (2500) ;
et
ladite au moins une unité de recherche (2000) est adaptée pour lancer et prendre en charge une recherche sur la base des informations de recherche présentées pour au moins l'une des stations mobiles (3000) dans la zone de recherche au moyen de l'agencement d'antenne (2100) et des moyens logiques (2200) qui sont adaptés pour recevoir des signaux de commande de l'interface utilisateur (2500).
